# FASCICULE DE BREVET EUROPEEN

(11) **EP 2 079 125 B1**
(45) Date de publication et mention de la délivrance du brevet: **25.10.2017**
(21) Numéro de dépôt: 08291208.0
(22) Date de dépôt: 18.12.2008
(51) Int. Cl.: H01M 10/34, H01M 10/44, H01M 10/46, H01M 10/24, H01M 10/42

(54) **Procédé de gestion de la charge d'une batterie**
Verfahren zur Steuerung des Aufladevorgangs einer Batterie
Method for managing the charge of a battery

(30) Priorité: 08.01.2008 FR 0800097
(43) Date de publication de la demande: 15.07.2009
(73) Titulaire: Arts Energy, 16440 Nersac (FR)
(72) Inventeur: Gardes, Florian, 16340 L'Isle d'Espagnac (FR); Juan, Antoine, 16430 Champniers (FR); Maloizel, Serge, 16730 Trois Palis (FR)
(74) Mandataire: Hirsch & Associés

(56) Documents cités:
- US-A- 5 363 031
- US-A1- 2003 094 927
- US-B1- 6 307 349

## Description

La présente invention se rapporte à un procédé de gestion de la charge d'une batterie comprenant au moins un accumulateur et utilisée dans des environnements froids. Elle s'étend, en outre, à un système électronique pour batterie et à une batterie utilisant un tel système.

Un générateur électrochimique ou accumulateur (ces deux termes sont équivalents) est un dispositif de production d'électricité dans lequel de l'énergie chimique est convertie en énergie électrique. L'énergie chimique est constituée par des composés électrochimiquement actifs déposés sur au moins une face d'électrodes disposées dans l'accumulateur. L'énergie électrique est produite par des réactions électrochimiques au cours d'une décharge de l'accumulateur. Les électrodes, disposées dans un conteneur, sont connectées électriquement à des bornes de sortie de courant qui assurent une continuité électrique entre les électrodes et un consommateur électrique auquel l'accumulateur est associé.

Une batterie est généralement conçue pour fonctionner dans des conditions dites nominales, c'est-à-dire dans des gammes de température, courant et tension données. L'utilisation d'une batterie hors de sa plage de température nominale, typiquement entre 0°C et 40°C, peut entraîner une limitation de ses performances ou son vieillissement prématuré. Par exemple, une charge menée à une température trop basse peut conduire à une batterie insuffisamment chargée et une décharge menée à une température trop basse peut conduire à une dégradation des performances de la batterie, par exemple l'inaptitude à fournir des courants importants. Il est connu du document FR-A-2 282 735 un procédé de charge d'une batterie selon lequel on chauffe la batterie par alimentation d'un circuit de chauffage lorsque sa température se situe au-dessous d'une valeur déterminée.

Or, certaines batteries sont utilisées dans des environnements froids avec une température ambiante moyenne inférieure à la température minimale de la plage de fonctionnement nominal de la batterie. Ainsi, par exemple, les batteries dites de back-up pour les baies télécom placées à l'extérieur des bâtiments peuvent être exposées durant l'hiver à des températures de -20°C ou moins. De même, certains outils portatifs peuvent être utilisés dans des environnements froids. Dans de telles conditions de température, les performances des batteries peuvent être fortement dégradées, voire s'avérer insuffisantes en cas de besoin, rendant ainsi les batteries non opérationnelles.

Les batteries sont généralement maintenues chargées par une électronique de contrôle qui surveille leur état de charge (SOC : « state of charge » en anglais) et commande la charge de la batterie depuis une alimentation principale afin de garantir un état de charge (SOC) proche de 100 % lorsque la batterie doit être utilisée.

Le document US 5,363,031 décrit un système pour optimiser la charge d'une batterie. Ce système détermine l'état de charge de la batterie ainsi que sa température puis sélectionne le régime de charge à appliquer.

Le document US 2003/0094927 décrit une méthode et un système pour améliorer la stratification des batteries, notamment des batteries au plomb. Pour cela, le système applique un courant de surcharge pendant et après la charge complète de la batterie.

Le problème de température de la batterie est particulièrement sensible dans les phases d'équilibrage et de maintien de la charge parce que, contrairement à la phase de charge, ces phases provoquent peu d'échauffement de la batterie du fait qu'elles utilisent de faibles courants. En effet, en désignant par C la capacité de la batterie, une charge rapide se fait typiquement avec un courant compris entre C/10 et C tandis que les charges d'équilibrage et d'entretien ont lieu respectivement avec un courant compris entre C/100 et C/20 et entre C/500 et C/100. Par exemple, pour une batterie de capacité 10 A.h, cela signifie qu'un courant compris entre 1 A et 10 A est utilisé pour la phase de charge alors que des courants respectivement compris entre 100 mA et 500 mA et entre 20 mA et 100 mA sont employés pour les phases d'équilibrage et d'entretien de la charge. Durant ces phases d'équilibrage et d'entretien, l'intensité du courant appliqué à la batterie est insuffisante pour provoquer un échauffement de la batterie.

Il est donc nécessaire de prévoir un système électronique qui permet de maintenir les batteries utilisées dans un environnement froid dans leur plage nominale de température pour assurer leur bon fonctionnement lorsque elles doivent être utilisées.

Il est connu de positionner un réchauffeur autour de la batterie. C'est ce qui est proposé par exemple dans le brevet US-A-5 281 792. Un tel réchauffeur est constitué d'un système résistif qui dissipe des calories par effet Joule vers la batterie. Le positionnement du réchauffeur autour de la batterie est choisi de telle sorte qu'il assure un bon transfert thermique des calories vers la batterie.

Il est aussi possible de disposer des éléments chauffants entre les accumulateurs de la batterie. Par exemple, le document EP-A-1261 065 propose une couverture thermique agencée entre les accumulateurs de la batterie afin de faire circuler un liquide réfrigérant ou chauffant selon les besoins.

Un réchauffeur ou une couverture chauffante nécessite une source d'énergie extérieure et doit être commandé par un système thermostatique propre ou le système de charge de la batterie. L'utilisation d'un tel système réchauffeur implique l'ajout d'un composant ce qui augmente le coût total de la batterie.

Il existe donc un besoin pour une solution économique qui permette d'utiliser les batteries dans des environnements froids.

A cet effet, l'invention propose d'utiliser la chaleur produite par les batteries elles-mêmes pendant des phases de surcharge. Cet échauffement est proportionnel au courant appliqué à la batterie et provient de la recombinaison des couples électrochimiques à électrolyte alcalin, comme par exemple les couples nickel-métal hydrure (Ni-MH) ou nickel-cadmium (Ni-Cd). Le circuit de charge peut donc servir à réchauffer la batterie.

L'invention propose plus particulièrement un procédé de gestion de la charge d'une batterie selon la revendication 1. Selon un mode de réalisation, la température de la batterie correspond à la température la plus faible mesurée sur chacun des accumulateurs de la batterie.

Selon les modes de réalisation, les accumulateurs sont de type nickel-métal hydrure ou nickel-cadmium.

D'autres caractéristiques et avantages de l'invention apparaîtront à la lecture de la description qui suit des modes de réalisation de l'invention, donnés à titre d'exemple et en référence aux figures annexées qui montrent :
- Figure 1, une représentation schématique d'un système électronique selon l'invention;
- Figure 2, les variations de température de la batterie lors d'une simulation du procédé selon l'invention;
- Figure 3, les variations de température de la batterie lors d'une simulation du procédé selon l'invention.

L'invention concerne un procédé de gestion de la charge d'une batterie. L'invention propose de maintenir une batterie dans sa plage nominale de température, même si cette batterie est utilisée dans un environnement froid. A cet effet, l'invention propose d'utiliser la chaleur produite par les batteries à électrolyte alcalin lors de leur charge ou surcharge. Le procédé de gestion de la charge prévoit d'appliquer un courant de surcharge pour augmenter la température de la batterie si cette température est trop basse.

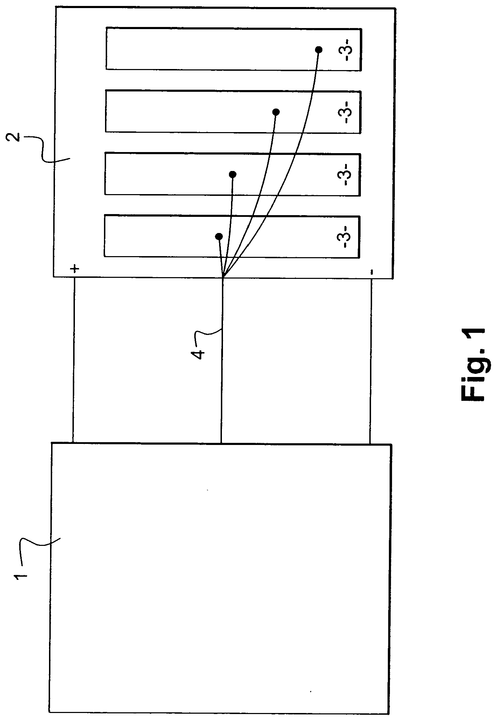

Un système électronique permettant de mettre en oeuvre le procédé est décrit en référence à la figure 1.

Le système électronique comprend un circuit de charge 1 associé à une batterie 2.

Le circuit de charge 1 peut être relié à l'alimentation principale d'une application à laquelle la batterie 2 est destinée en secours ou peut intégrer ou être relié à une source de courant auxiliaire pour charger la batterie d'un outil portatif. Le circuit de charge 1 peut ainsi commander l'application d'un courant de charge ou de maintien de la charge de la batterie 2.

La batterie 2 comprend un ou plusieurs accumulateurs 3 électrochimiques rechargeables à électrolyte alcalin qui peuvent être connectés en série ou en parallèle ou en configuration série/parallèle en fonction de la tension nominale de fonctionnement du consommateur et de la quantité d'énergie (Ampère.heure) qu'il est prévu de fournir à ce consommateur. Les accumulateurs 3 peuvent être de toute forme, en particulier prismatique, cylindrique ou concentrique.

La batterie 2 comprend, en outre, au moins un capteur de température 4 qui délivre un signal reflétant la température de la batterie, ce signal pouvant être reçu et analysé par une unité électronique associée au circuit de charge 1. Le capteur de température 4 peut être une thermistance, un capteur à base de silicium, un thermocouple ou tout composant permettant d'obtenir une information de température. Dans un mode de réalisation, la batterie 2 peut comprendre une pluralité de capteurs de température 4 mesurant la température de chacun des accumulateurs 3 de la batterie 2. L'unité électronique associée au circuit de charge 1 peut alors sélectionner comme signal de température de la batterie 2 celui correspondant à l'accumulateur 3 de plus basse température.

Il peut être aussi prévu dans la batterie 2 des capteurs qui mesurent la tension et/ou le courant de chaque accumulateur 3 de la batterie 2 afin de contrôler l'état de charge de chaque accumulateur 3 et équilibrer la charge de la batterie 2.

Le circuit de charge 1 peut être tout circuit de charge connu capable d'appliquer un courant à la batterie 2. Le circuit de charge 1 est capable d'appliquer de forts courants pour réaliser une charge rapide lors de la phase de charge mais aussi de faibles courants lors des phases d'équilibrage ou de maintien de la charge.

Selon l'invention, l'unité électronique du circuit de charge 1 est adaptée à commander l'application d'un courant de surcharge. Par l'expression «courant de surcharge », on entend l'application d'un courant à la batterie alors que l'état de la charge de la batterie (SOC) est supérieur à 95 %, voire 100 %.

Le procédé de l'invention propose d'appliquer à la batterie 2 un courant de surcharge lorsque sa température est inférieure à une température seuil T₁ afin de la réchauffer. La température seuil T₁ peut correspondre par exemple à la température minimale de la plage de température nominale de la batterie 2.

Le système électronique fonctionne de la manière suivante. L'unité électrique associée au circuit de charge reçoit un signal représentatif de la température de la batterie 2. Le signal provient de l'un des capteurs de température 4 de la batterie 2 ou d'un traitement des différents signaux provenant de différents capteurs. L'unité électronique effectue alors une comparaison entre la température de la batterie 2 et la température seuil T₁ prédéfinie. Il est aussi possible que plusieurs signaux, chacun correspondant à la température d'un accumulateur 3, soient envoyés vers l'unité électronique associée au circuit de charge 1 pour analyse et comparaison avec la température seuil T₁ ; tant que la température d'un des accumulateurs 3 est inférieure à la température seuil T₁, l'unité électronique du circuit de charge 2 commande l'application d'un courant de surcharge.

Le courant de surcharge moyen appliqué peut être compris entre C/40 et C/10, c'est-à-dire supérieur au courant utilisé pendant les phases d'équilibrage et de maintien de la charge mais inférieur au courant de charge. Le courant de surcharge permet de garantir un échauffement suffisant. Le courant de surcharge doit être choisi en fonction du cas le plus défavorable, soit lorsque l'écart entre la température ambiante et la température seuil T₁ est maximal. C'est dans ce cas qu'un échauffement maximal et donc un fort courant est nécessaire. Par exemple, dans le cas d'une batterie de capacité 10 A.h, le courant de surcharge peut être compris entre 250 mA et 1000 mA. Les valeurs de courant de surcharge ne sont données qu'à titre indicatif dans la mesure où ces valeurs dépendent de la configuration de la batterie et de l'écart entre la température ambiante et la température seuil T₁.

Il n'est cependant pas souhaitable que la batterie 2 fonctionne au-delà de la température maximale de sa plage de température nominale. En effet, outre la dégradation des performances de la batterie 2 lorsqu'elle est utilisée à une température trop basse, une charge ou une décharge menées à une température excessive peuvent également conduire à une dégradation rapide des composants de la batterie 2. Dans certains cas, on peut observer un emballement thermique de la batterie 2, voire son explosion.

Ainsi, le procédé et le système électronique de l'invention prévoient que le courant de surcharge est interrompu quand la température de la batterie 2 dépasse une deuxième température seuil T₂ supérieure à la première température seuil T₁. La deuxième température seuil T₂ peut par exemple correspondre à la valeur minimale assurant un bon fonctionnement de la batterie 2 augmentée de quelques degrés. Dans l'unité électronique, un amplificateur opérationnel utilisé en montage à hystérésis peut, par exemple, être utilisé pour réaliser les comparaisons avec les premières et deuxièmes températures seuils T₁ et T₂.

Lorsque la batterie 2 n'est plus chauffée par l'application d'un courant de surcharge, la température de la batterie 2 peut redescendre en dessous du seuil minimal de bon fonctionnement ; le circuit de charge 1 applique alors à nouveau un courant de surcharge. La température de la batterie 2 augmente en conséquence et lorsque la température atteint de nouveau la deuxième température seuil T₂, le courant de surcharge est arrêté.

Ainsi, des phases d'application d'un courant de surcharge alternent avec des phases où aucun courant n'est appliqué. De ce fait, la batterie 2 reçoit un courant de surcharge moyen asservi à la température de la batterie 2 pour maintenir la batterie à une température comprise dans sa plage de température nominale et garantir son bon fonctionnement.

L'application du courant de surcharge est indépendante des courants appliqués usuellement par le circuit de charge 1 (courant de charge, courant d'équilibrage et courant de maintien de la charge). Ainsi, le système électronique peut être utilisé aussi bien dans un environnement chaud où le courant de surcharge n'est pas utile que dans une ambiance froide. De ce fait, le système électronique est particulièrement bien adapté au cas d'environnements changeants, notamment dans le cas où la batterie 2 est destinée fonctionner à l'extérieur aussi bien par temps chauds que par temps froids.

Les circuits de charge existant peuvent être relativement facilement adaptés pour inclure la fonction de maintien de la température de la batterie 2. C'est notamment le cas des systèmes électroniques intégrant déjà un capteur de température 4 dans la batterie 2 et une gestion de la charge pilotée par logiciel. Pour implémenter le procédé de l'invention, l'unité électronique associée au chargeur sera programmée avec un algorithme de gestion de la charge approprié.

Cette modification du logiciel de gestion de la charge se fait sans ajout de matériel au niveau du système électronique existant contrairement à la solution utilisée actuellement dans l'état de l'art qui nécessite l'addition d'un système résistif pour chauffer la batterie. L'invention apporte donc une solution à l'utilisation de batterie dans des environnements froids.

Dans le cas des systèmes de charge analogiques, il est aussi envisageable de rajouter une telle fonction de maintien de la batterie 2 dans sa plage de température nominale en ajoutant un moyen de piloter une source de courant en fonction de la température de la batterie 2.

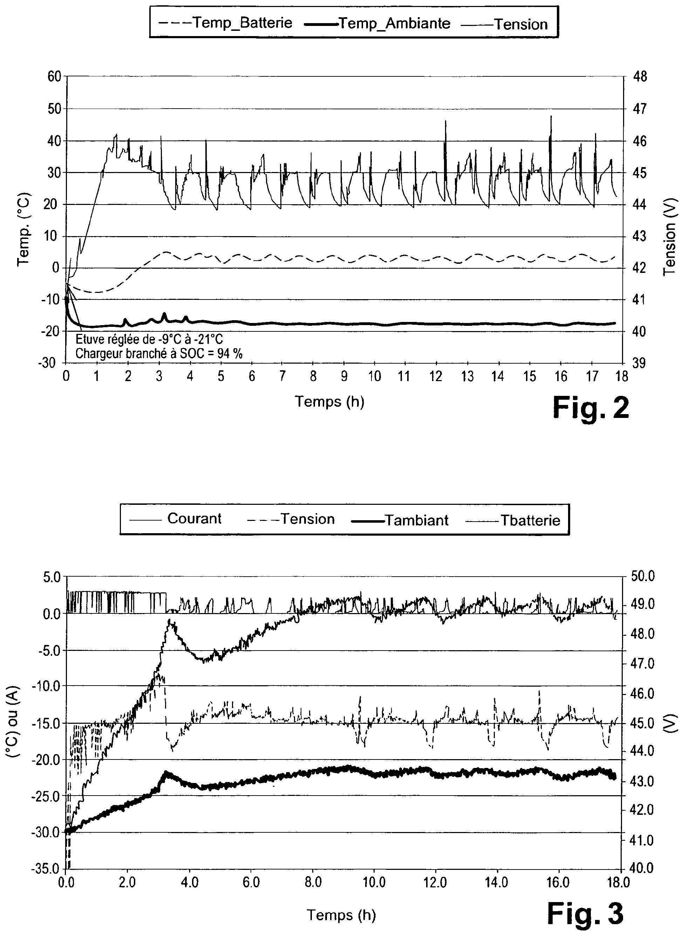

La figure 2 montre une simulation du procédé selon l'invention. La batterie 2 utilisée comprend 30 accumulateurs de type Ni-MH et de capacité 9,5 A.h en série. Les conditions expérimentales de la simulation effectuée sont les suivantes. Le système électronique est placé dans une étuve, pour contrôle de la température ambiante. A l'instant initial, la température de la batterie 2 est de -5°C dans une étuve de température -9°C et l'état de la charge (SOC) de la batterie 2 est de 50%. L'étuve est alors brusquement mise à -18°C environ. L'évolution temporelle du système est alors étudiée en mesurant la température de la batterie 2, la température de l'environnement ainsi que la tension de la batterie 2.

La durée des phases d'application du courant de surcharge et d'arrêt dépend de l'écart de température entre la température ambiante et la température minimale désirée pour la batterie 2.

Dans la simulation de la figure 2, l'écart entre la température ambiante et la température minimale désirée pour la batterie 2 est de 20°C. Il en résulte des impulsions de courant de surcharge à C/20 pendant 30 minutes suivies de périodes d'arrêt de 30 min. Le courant de surcharge moyen appliqué pour maintenir la température de la batterie 2 à 3°C avec une incertitude de ± 1° C s'élève donc à un courant de surcharge moyen de C/40.

L'analyse des courbes de la figure 2 montre ainsi que le pilotage d'une source de courant de C/20 maintient la batterie 2 à environ 3°C dans un environnement dont la température moyenne est de -18°C.

La simulation de la figure 3 a été réalisée avec le même système que celui utilisé pour la simulation de la figure 2. Les conditions expérimentales de cette deuxième simulation sont les suivantes. Le système électronique est toujours dans une étuve afin de contrôler la température de son environnement. Cependant, l'étuve étant mise à une température plus basse que dans la première simulation, le système électronique est placé dans une boîte en carton pour réduire les effets de la ventilation forcée de l'étuve.

A l'instant initial, la température de la batterie 2 est de -30°C dans une étuve à - 30 °C et la batterie 2 est initialement déchargée. La batterie 2 est alors chargée.

L'évolution temporelle du système est alors étudiée en mesurant la température de la batterie 2, la température de l'environnement (la température ambiante est celle à l'intérieur du carton), la tension de la batterie 2 ainsi que le courant de la batterie 2.

Pendant la phase de charge rapide à C/3, un réchauffement de la batterie 2 et de l'environnement est observé. Puis, la batterie 2 chargée est maintenue à environ 0°C par le système électronique selon l'invention.

Le procédé et le système électronique associé permettent donc une utilisation optimale d'une batterie dans un environnement froid avec des températures en deçà de la température nominale de fonctionnement.

## Revendications

1. Procédé de gestion de la charge d'une batterie (2) comprenant au moins un accumulateur (3) électrochimique rechargeable à électrolyte alcalin dans lequel:
- a) un circuit de charge (1) applique un courant de surcharge lorsque la température de la batterie (2) est inférieure à une première température seuil (T₁), la température seuil (T₁) étant supérieure à la température ambiante et étant la température minimale désirée pour la batterie, prédéfinie par un utilisateur, le courant de surcharge étant appliqué à la batterie lorsque son état de charge est supérieur à 95%,
- b) le circuit de charge arrête d'appliquer le courant de surcharge lorsque la température de la batterie est supérieure à une deuxième température seuil (T₂), et applique un courant de maintien de la charge de la batterie,
ledit procédé de gestion de la charge étant mis en oeuvre dans un environnement froid avec des températures en deçà de la température nominale de fonctionnement de la batterie.

2. Procédé selon la revendication 1, dans lequel la température de la batterie (2) correspond à la température la plus faible mesurée sur chacun des accumulateurs (3) de la batterie (2).

3. Procédé selon l'une des revendications 1 à 2, dans lequel des accumulateurs (3) sont de type NiMH.

4. Procédé selon l'une des revendications 1 à 2, dans lequel des accumulateurs (3) sont de type NiCd.

5. Procédé selon l'une des revendications précédentes, dans lequel la température seuil T1 correspond à la température minimale de la plage de température nominale de la batterie.

## Patentansprüche

1. Verfahren zur Steuerung der Ladung einer Batterie (2), die mindestens einen aufladbaren elektrochemischen Akku (3) mit alkalischem Elektrolyt umfasst, wobei:
a) eine Ladeschaltung (1) einen Überlaststrom anlegt, wenn die Temperatur der Batterie (2) niedriger als eine erste Schwellentemperatur (T₁) ist, wobei die Schwellentemperatur (T₁) höher als die Raumtemperatur und die, von einem Benutzer vorgegebene, für die Batterie gewünschte Mindesttemperatur ist, und wobei der Überlaststrom an die Batterie angelegt wird, wenn ihr Ladezustand höher als 95% ist,
b) die Ladeschaltung aufhört den Überlaststrom anzulegen, wenn die Temperatur der Batterie höher als eine zweite Schwellentemperatur (T₂) ist, und einen Haltestrom für die Batterieladung anlegt
wobei das Verfahren zur Steuerung der Ladung in einer kalten Umgebung angewendet wird, die unterhalb der nominalen Betriebstemperatur der Batterie liegt.

2. Verfahren nach Anspruch 1, wobei die Temperatur der Batterie (2) der niedrigsten, der auf jedem Akku (3) der Batterie (2) gemessenen Temperatur entspricht.

3. Verfahren nach einem der Ansprüche 1 bis 2, wobei die Akkus (3) vom Typ NiMH-sind.

4. Verfahren nach einem der Ansprüche 1 bis 2, wobei die Akkus (3) vom Typ NiCd-sind.

5. Verfahren nach einem der vorangehenden Ansprüche, wobei die Schwellentemperatur (T₁) der Mindesttemperatur des Temperaturbereichs der nominalen Temperatur der Batterie entspricht.

## Claims

1. A method for managing the charge of a battery (2) comprising at least one rechargeable electrochemical cell (3) with alkaline electrolyte, wherein:
- a) a charging circuit (1) applies an overcharge current when the temperature of the battery (2) is below a first threshold temperature (T₁), the threshold temperature (T₁) being higher than ambient temperature and being the desired minimum temperature for the battery, predefined by a user, the overcharge current being applied to the battery when its state of charge is higher than 95%,
- b) the charging circuit ceases to apply the overcharge current when the temperature of the battery is higher than a second threshold temperature (T₂), and applies a trickle charge current to the battery,
said method for managing the charge being implemented in a cold environment with temperatures which are below the nominal operating temperature of the battery.

2. The method according to claim 1, wherein the temperature of the battery (2) corresponds to the lowest temperature measured for each one of the cells (3) of the battery (2).

3. The method according to one of claims 1 to 2, wherein cells (3) are of the NiMH type.

4. The method according to one of claims 1 to 2, wherein cells (3) are of the NiCd type.

5. The method according to one of the preceding claims, wherein the threshold temperature (T₁) corresponds to the minimum temperature of the nominal temperature range of the battery.
